(19) Europäisches Patentamt
European Patent Office
Office européen des brevets

(11) **EP 4 586 111 A1**

(12) **EUROPEAN PATENT APPLICATION**
published in accordance with Art. 153(4) EPC

(43) Date of publication:
**16.07.2025   Bulletin 2025/29**

(21) Application number: **23884232.2**

(22) Date of filing: **28.06.2023**

(51) International Patent Classification (IPC):
*G06F 17/16* (2006.01)

(52) Cooperative Patent Classification (CPC):
**G06F 7/523; G06F 17/16**

(86) International application number:
**PCT/CN2023/103325**

(87) International publication number:
**WO 2024/093293 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.11.2022   CN 202211361775**
**19.01.2023   CN 202310104348**

(71) Applicant: **Huawei Technologies Co., Ltd.**
**Shenzhen, Guangdong 518129 (CN)**

(72) Inventors:
• **YAN, Baicheng**
**Shenzhen, Guangdong 518129 (CN)**
• **WANG, Zhe**
**Shenzhen, Guangdong 518129 (CN)**
• **WANG, Long**
**Shenzhen, Guangdong 518129 (CN)**
• **YU, Chen**
**Shenzhen, Guangdong 518129 (CN)**
• **MA, Penghao**
**Shenzhen, Guangdong 518129 (CN)**
• **WANG, Zheng**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD FOR CARRYING OUT STENCIL COMPUTATIONS, AND APPARATUS**

(57)     Embodiments of this application disclose a stencil computation method and apparatus, and pertain to the field of high performance computing technologies. The method is performed by a processor including a matrix unit. The method includes: obtaining a to-be-processed data matrix of an application; converting data on which a stencil computation is to be performed in the data matrix into an inner product operation performed on a minimum data matrix and a first coefficient matrix; converting the inner product operation performed on the minimum data matrix and the first coefficient matrix into an outer product operation performed on a second coefficient matrix and the minimum data matrix, and performing the outer product operation through the matrix unit to obtain a first result matrix; and performing a trace operation on the first result matrix to obtain a result of the stencil computation. According to this application, the stencil computation can be implemented based on the matrix unit, and efficiency of performing the stencil computation by the processor can be improved.

```
┌─────────────────────────────────────────────┐  301
│ A processor receives a stencil computation    │
│ execution request sent by an application      │
└─────────────────────────────────────────────┘
                      │
                      ▼
┌─────────────────────────────────────────────┐  302
│ The processor obtains a to-be-processed data  │
│ matrix of the application                     │
└─────────────────────────────────────────────┘
                      │
                      ▼
┌─────────────────────────────────────────────┐  303
│ Convert data on which a stencil computation is│
│ to be performed in the data matrix into an    │
│ inner product operation performed on a        │
│ minimum data matrix and a first coefficient   │
│ matrix                                        │
└─────────────────────────────────────────────┘
                      │
                      ▼
┌─────────────────────────────────────────────┐  304
│ Convert the inner product operation performed │
│ on the minimum data matrix and the first      │
│ coefficient matrix into an outer product      │
│ operation performed on a second coefficient   │
│ matrix and the minimum data matrix, and       │
│ perform the outer product operation through   │
│ the matrix unit to obtain a first result      │
│ matrix                                        │
└─────────────────────────────────────────────┘
                      │
                      ▼
┌─────────────────────────────────────────────┐  305
│ Perform a trace operation on the first result │
│ matrix to obtain a result of the stencil      │
│ computation                                   │
└─────────────────────────────────────────────┘
```

FIG. 3

## Description

This application claims priorities to Chinese Patent Application No. 202211361775.2, filed on November 2, 2022 and entitled "MATRIX MULTIPLICATION COMPUTATION METHOD", and to Chinese Patent Application No. 202310104348.4, filed on January 19, 2023 and entitled "STENCIL COMPUTATION METHOD AND APPARATUS", both of which are incorporated herein by reference in their entireties.

## TECHNICAL FIELD

This application relates to the field of high performance computing technologies, and in particular, to a stencil computation method and apparatus.

## BACKGROUND

A stencil (Stencil) computation needs to be performed on data of some applications, such as data of high performance computing (High Performance Computing, HPC) applications. The stencil computation may be, for example, image processing, and solving of a differential equation and a partial differential equation.

When an application needs to perform the stencil computation in a running process, the application may send a stencil computation execution request to a processor. The processor that receives the stencil computation execution request may traverse each data point or a specified data point of data on which the stencil computation is to be performed, and perform a computation operation on each data point and a neighboring data point corresponding to each data point. In the traversal process, a same computation operation is performed on the data point and the neighboring data point of the data point each time. A computation domain may be a data matrix, for example, a two-dimensional data matrix or a three-dimensional data matrix.

In the related technology, a processor may convert a computation operation performed on a data point and a neighboring data point of the data point into a vector operation, and cooperate with a vector unit to implement the corresponding vector operation. However, currently, efficiency of implementing a stencil computation by the processor only through the vector unit is low, and therefore efficiency of performing the stencil computation currently needs to be further improved.

## SUMMARY

Embodiments of this application provide a stencil computation method and apparatus, so that a stencil computation can be implemented based on a matrix unit, and efficiency of performing the stencil computation can be improved. Corresponding technical solutions are as follows:

According to a first aspect, a stencil computation method is provided. The method is performed by a processor including a matrix unit. The method includes: obtaining a to-be-processed data matrix of an application; converting data on which a stencil computation is to be performed in the data matrix into an inner product operation performed on a minimum data matrix and a first coefficient matrix; converting the inner product operation performed on the minimum data matrix and the first coefficient matrix into an outer product operation performed on a second coefficient matrix and the minimum data matrix, and performing the outer product operation through the matrix unit to obtain a first result matrix; and performing a trace operation on the first result matrix to obtain a result of the stencil computation.

In the solution provided in this application, the processor can convert the stencil computation into the outer product operation performed on the matrices, and then may implement the converted outer product operation through the matrix unit, so as to implement the stencil computation. Compared with a manner of implementing the stencil computation based on a vector unit, a large quantity of original vector operations are replaced with matrix operations, so that efficiency of performing the stencil computation can be improved.

In an implementation, the application is an application related to differential equation solving, difference equation solving, or image processing, for example, a high performance computing HPC application.

In an implementation, the data on which the stencil computation is to be performed is a target data point and a neighboring data point of the target data point in the data matrix. The stencil computation may be performed on one or more target data points each time.

In an implementation, before the converting data on which a stencil computation is to be performed in the data matrix into an inner product operation performed on a minimum data matrix and a first coefficient matrix, the method further includes: selecting, in a same row of the data matrix, a plurality of consecutive data points on which the stencil computation is not performed as target data points, where a quantity of the plurality of selected data points is less than or equal to a first specified quantity.

In the solution provided in this application, the processor may perform the stencil computation on a plurality of target data points at a time, so that efficiency of performing the stencil computation can be further improved. The plurality of target data points may be a plurality of consecutive data points that are in a same row and on which the stencil computation is not performed. A maximum quantity of the plurality of selected data points is the first specified quantity.

In an implementation, a manner of computing the first specified quantity includes: determining a first quantity of data points that can be stored at most in a vector register configured to store the target data points; determining a sum of a maximum left offset and a maximum right offset of a neighboring data point of any data point in the data matrix relative to the any data point, to obtain a first value; and determining a difference between the first quantity and the first value as the first specified quantity.

In an implementation, before the converting data on which a stencil computation is to be performed in the data matrix into an inner product operation performed on a minimum data matrix and a first coefficient matrix, the method further includes: determining a plurality of adjacent rows in the data matrix, and selecting, in each determined row, at least one data point on which the stencil computation is not performed as a target data point, where a quantity of the plurality of determined rows is less than or equal to a second specified quantity.

In the solution provided in this application, the processor may perform the stencil computation on data points in a plurality of rows at a time. In this way, the stencil computation may be performed on a plurality of data points at a time, and efficiency of performing the stencil computation may be further improved. A maximum quantity of the plurality of determined rows is the second specified quantity.

In an implementation, a manner of computing the first specified quantity includes: determining a first quantity of data points that can be stored at most in a vector register of a vector unit; determining a sum of a maximum left offset and a maximum right offset of a neighboring data point of any data point in the data matrix relative to the any data point, to obtain a first value, and adding one to the first value to obtain a second value; determining a sum of a maximum upper offset and a maximum lower offset of the neighboring data point of the any data point in the data matrix relative to the any data point, to obtain a third value; determining a ratio corresponding to the first quantity and the second value and a difference between the first quantity and the third value; and determining a smaller value in the ratio and the difference as the second specified quantity.

In an implementation, the converting the inner product operation performed on the minimum data matrix and the first coefficient matrix into an outer product operation performed on a second coefficient matrix and the minimum data matrix, and performing the outer product operation through the matrix unit to obtain a first result matrix includes: transposing the first coefficient matrix to obtain the second coefficient matrix; and performing the outer product operation on the second coefficient matrix and the minimum data matrix through the matrix unit, to obtain a second result matrix, where the second result matrix includes a first result matrix corresponding to each target data point.

In the solution provided in this application, the processor may convert the inner product operation performed on the minimum data matrix and the first coefficient matrix into the outer product operation performed on the second coefficient matrix (namely, a matrix obtained by transposing the first coefficient matrix) and the minimum data matrix. In this way, the processor may implement the stencil computation based on an SME that can implement only a matrix outer product operation. In addition, when the processor performs the stencil computation on the plurality of target data points each time, the second result matrix obtained by performing the outer product operation on the second coefficient matrix and the minimum data matrix includes the first result matrix corresponding to each target data point. In this way, a result of performing the stencil computation on each target data point may be obtained by performing a trace operation on each first result matrix, so that efficiency of performing the stencil computation can be improved.

In an implementation, after the performing the outer product operation on the second coefficient matrix and the minimum data matrix through the matrix unit, the method further includes: if more than a third specified quantity of data points on which the stencil computation is not performed still exist in a target row in which the target data point is located in the data matrix, selecting, in the target row, a plurality of consecutive data points that are separated from the target data point by N data points and on which the stencil computation is not performed, where N is equal to the sum of the maximum left offset and the maximum right offset of the neighboring data point of the any data point in the data matrix relative to the any data point; and using the plurality of selected data points as updated target data points, and performing the step of converting data on which a stencil computation is to be performed in the data matrix into an inner product operation performed on a minimum data matrix and a first coefficient matrix.

In the solution provided in this application, when the processor successively computes a plurality of consecutive data points in a same row twice, there may be N data points between data points selected for a second time and data points selected for a first time. In this way, a redundancy computation exists between a stencil computation performed on the plurality of data points for the first time and a stencil computation performed on the plurality of data points for the second time can be avoided, and a quantity of data points on which the stencil computation needs to be performed in the data matrix is reduced as a whole, so that efficiency of performing the stencil computation can be further improved.

In an implementation, a manner of computing the N data points that are used for separation is as follows: Data points in last N columns in the second result matrix are stored; and for the N data points that are used for separation, a result of performing the stencil computation on the N data points that are used for separation is determined based on the data points in the last N columns and data points in first N columns in a second result matrix corresponding to the updated target data points.

In an implementation, after the result of the stencil computation is obtained, if a data point on which the stencil computation is to be performed exists in the data matrix, the step of converting data on which a stencil computation is to be performed in the data matrix into an inner product operation performed on a minimum data matrix and a first coefficient matrix is performed. In this way, until all data points in the data matrix are computed, a result of performing the stencil computation on the data matrix may be obtained.

In an implementation, the matrix unit is a scalable matrix element SME.

According to a second aspect, a stencil computation apparatus is provided. The apparatus is used in a processor including a matrix unit, and the apparatus includes:

an obtaining module, configured to obtain to-be-processed data of an application, where the to-be-processed data is a data matrix;

a conversion module, configured to: convert data on which a stencil computation is to be performed in the data matrix into an inner product operation performed on a minimum data matrix and a first coefficient matrix; and convert the inner product operation performed on the minimum data matrix and the first coefficient matrix into an outer product operation performed on a second coefficient matrix and the minimum data matrix; and

an operation module, configured to: perform the outer product operation through the matrix unit to obtain a first result matrix, and perform a trace operation on the first result matrix to obtain a result of the stencil computation.

In an implementation, the application is a high performance computing HPC application.

In an implementation, the data on which the stencil computation is to be performed is a target data point and a neighboring data point of the target data point in the data matrix.

In an implementation, the conversion module is further configured to select, in a same row of the data matrix, a plurality of consecutive data points on which the stencil computation is not performed as target data points, where a quantity of the plurality of selected data points is less than or equal to a first specified quantity.

In an implementation, the conversion module is further configured to: determine a first quantity of data points that can be stored at most in a vector register configured to store the target data points; determine a sum of a maximum left offset and a maximum right offset of a neighboring data point of any data point in the data matrix relative to the any data point, to obtain a first value; and determine a difference between the first quantity and the first value as the first specified quantity.

In an implementation, the conversion module is further configured to: determine a plurality of adjacent rows in the data matrix, and select, in each determined row, at least one data point on which the stencil computation is not performed as a target data point, where a quantity of the plurality of determined rows is less than or equal to a second specified quantity.

In an implementation, the conversion module is further configured to: determine a first quantity of data points that can be stored at most in a vector register of a vector unit; determine a sum of a maximum left offset and a maximum right offset of a neighboring data point of any data point in the data matrix relative to the any data point, to obtain a first value, and add one to the first value to obtain a second value; determine a sum of a maximum upper offset and a maximum lower offset of the neighboring data point of the any data point in the data matrix relative to the any data point, to obtain a third value; determine a ratio corresponding to the first quantity and the second value and a difference between the first quantity and the third value; and determine a smaller value in the ratio and the difference as the second specified quantity.

In an implementation, the conversion module is configured to convert the first coefficient matrix to obtain the second coefficient matrix. The operation module is configured to perform the outer product operation on the second coefficient matrix and the minimum data matrix through the matrix unit, to obtain a second result matrix, where the second result matrix includes a first result matrix corresponding to each target data point.

In an implementation, the conversion module is further configured to: if more than a third specified quantity of data points on which the stencil computation is not performed still exist in a target row in which the target data point is located in the data matrix, select, in the target row, a plurality of consecutive data points that are separated from the target data point by N data points and on which the stencil computation is not performed, where N is equal to the sum of the maximum left offset and the maximum right offset of the neighboring data point of the any data point in the data matrix relative to the any data point; and use the plurality of selected data points as updated target data points, and perform the step of converting data on which a stencil computation is to be performed in the data matrix into an inner product operation performed on a minimum data matrix and a first coefficient matrix.

In an implementation, the operation module is further configured to: store data points in last N columns in the second result matrix; and for the N data points that are used for separation, determine, based on the data points in the last N columns and data points in first N columns in a second result matrix corresponding to the updated target data points, a result of performing the stencil computation on the N data points that are used for separation.

In an implementation, the conversion module is configured to: if a data point on which the stencil computation is to be performed exists in the data matrix, perform the step of converting data on which a stencil computation is to be performed in the data matrix into an inner product operation performed on a minimum data matrix and a first coefficient matrix.

In an implementation, the matrix unit is a scalable matrix element SME.

According to a third aspect, a computer device is provided. The computer device includes a memory and a processor having a matrix unit, the memory stores at least one instruction, and the at least one instruction is loaded and executed by the processor to implement the stencil computation method according to any one of the first aspect or the implementations of the first aspect.

According to a fourth aspect, a computer-readable storage medium is provided. The computer-readable storage medium stores computer program code. When the computer program code is executed by a computer device, the computer device is enabled to perform the stencil computation method according to any one of the first aspect or the implementations of the first aspect.

According to a fifth aspect, a computer program product including instructions is provided. When the instructions are run by a computer device, the computer device is enabled to perform the stencil computation method according to any one of the first aspect or the implementations of the first aspect.

**BRIEF DESCRIPTION OF DRAWINGS**

FIG. 1 is a schematic diagram of a conventional stencil computation;
FIG. 2 is a schematic diagram of a structure of a computer device according to an embodiment of this application;
FIG. 3 is a schematic flowchart of a stencil computation method according to an embodiment of this application;
FIG. 4 is a schematic diagram of a matrix computation according to an embodiment of this application;
FIG. 5 is a schematic diagram of a matrix computation according to an embodiment of this application;
FIG. 6 is a schematic diagram of a matrix computation according to an embodiment of this application;
FIG. 7 is a schematic diagram of a matrix computation according to an embodiment of this application;
FIG. 8 is a schematic diagram of a matrix computation according to an embodiment of this application;
FIG. 9 is a schematic diagram of a matrix computation according to an embodiment of this application;
FIG. 10 is a schematic diagram of a matrix computation according to an embodiment of this application; and
FIG. 11 is a schematic diagram of a stencil computation apparatus according to an embodiment of this application.

**DESCRIPTION OF EMBODIMENTS**

To make the objectives, technical solutions, and advantages of this application clearer, the following further describes the implementations of this application in detail with reference to the accompanying drawings.

A stencil computation is a common computing mode in high performance computing (High Performance Computing, HPC), and is widely used in various fields, such as image processing and differential equation solving. The stencil computation is characterized by traversing each point in a computation area and performing a same computation operation on each point.

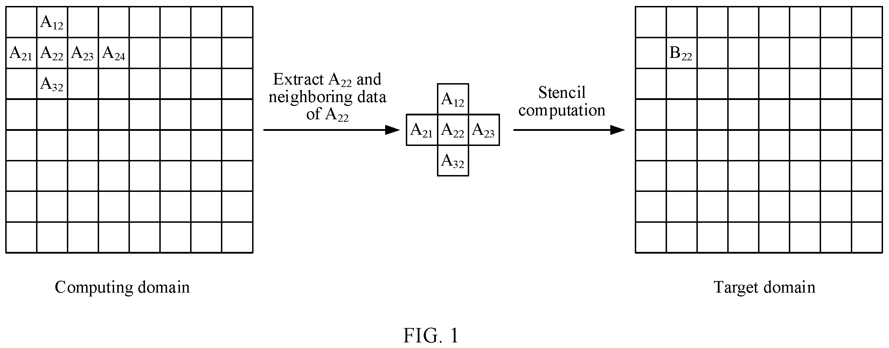

FIG. 1 is a schematic diagram of a conventional stencil computation. As shown in FIG. 1, the computation domain may be a data matrix, and a size and a shape of the data matrix are random. As shown in FIG. 1, the data matrix may be an 8*8 matrix. Performing the stencil computation on the data matrix is performing a same computation operation on each data point or a specified quantity of data points and a related neighboring point of the data point or the data points in the data matrix, to obtain a computation result and update a target domain. Generally, the computation operation performed on each data point is performing a weighted computation on the data point and the neighboring data point corresponding to the data point by using a preset coefficient. The neighboring data point corresponding to the data point may be a data point that is located in a same row and/or a same column as the data point in the matrix. In addition, in the computation domain, relative locations of each data point and the corresponding neighboring data point are usually the same. The data point and the corresponding neighboring data point may be adjacent, or may be separated by one or more data points. For example, in FIG. 1, a neighboring data point corresponding to A22 may be A23 or A24.

In an example, performing the stencil computation on a data point may be represented by Formula (1):

$$B_{i,j} = \sum c_k * A_{i+oi,j+oj} \quad \text{Formula (1)}$$

$A_{i,j}$ is any data point in the computing domain, a point that needs to be updated in the target domain and that corresponds to the data point is $B_{i,j}$, $oi$ and $oj$ are offsets of each neighboring data point relative to $A_{i,j}$ in two dimensions $i$ and $j$, and $c_k$ is a coefficient used when the stencil computation is performed on $A_{i,j}$ and each neighboring data point corresponding to $A_{i,j}$.

It can be learned from Formula (1) that, the stencil computation performed on the data point may be represented as an inner product operation performed on a minimum data matrix $DA_{i,j}$ formed by the data point and the neighboring data point of the data point and a coefficient matrix $CA$ formed by corresponding coefficients. In other words, Formula (1) may be converted into Formula (2):

$$B_{i,j} = CA \cdot DA_{i,j} \text{ Formula (2)}$$

A stencil computation performed on a data point having four neighboring data points is used as an example. After Formula (2) is extended, Formula (3) may be obtained:

$$B_{i,j} = c_1 * A_{i,j-1} + c_2 * A_{i,j+1} + c_3 * A_{i-1,j} + c_4 * A_{i+1,j} + c_5 * A_{i,j} \text{ Formula (3)}$$

$A_{i,j-1}$, $A_{i,j+1}$, $A_{i-1,j}$, and $A_{i+1,j}$ are neighboring data points of $A_{i,j}$, and $c_1$, $c_2$, $c_3$, $c_4$, and $c_5$ are respective coefficients corresponding to $A_{i,j-1}$, $A_{i,j+1}$, $A_{i-1,j}$, $A_{i+1,j}$, and $A_{i,j}$. If Formula (3) is converted into a form of a matrix inner product, Formula (3) may be represented as Formula (4):

$$B_{i,j} = \begin{bmatrix} 0 & c_3 & 0 \\ c_1 & c_5 & c_2 \\ 0 & c_4 & 0 \end{bmatrix} \cdot \begin{bmatrix} 0 & A_{i-1,j} & 0 \\ A_{i,j-1} & A_{i,j} & A_{i,j+1} \\ 0 & A_{i+1,j} & 0 \end{bmatrix} \text{ Formula (4)}$$

$$\begin{bmatrix} 0 & c_3 & 0 \\ c_1 & c_5 & c_2 \\ 0 & c_4 & 0 \end{bmatrix}$$ is a coefficient matrix, and $$\begin{bmatrix} 0 & A_{i-1,j} & 0 \\ A_{i,j-1} & A_{i,j} & A_{i,j+1} \\ 0 & A_{i+1,j} & 0 \end{bmatrix}$$ is a minimum data matrix.

An SVE is a scalable vector element, and provides a wide range of vector operation instructions, such as a vector addition, an inner product, and an outer product. Currently, in the related technology, an inner product operation performed on the foregoing matrix may be converted into a large quantity of vector operations by using a vector operation capability provided by the SVE, to implement the stencil computation.

Embodiments of this application provide a stencil computation method. In the method, a stencil computation may be implemented based on a matrix unit (for example, a scalable matrix element (Scalable Matrix Unit, SME)) in a processor. In this way, a matrix operation capability of the matrix unit can be directly used to implement the stencil computation. Compared with performing the stencil computation through a vector unit, this manner can improve efficiency of the stencil computation. In embodiments of this application, an example in which a matrix unit is an SME is used to describe the stencil computation method provided in embodiments of this application. Implementing the stencil computation method by another type of matrix unit is consistent with implementing the stencil computation method by the SME. Details are not described in this application.

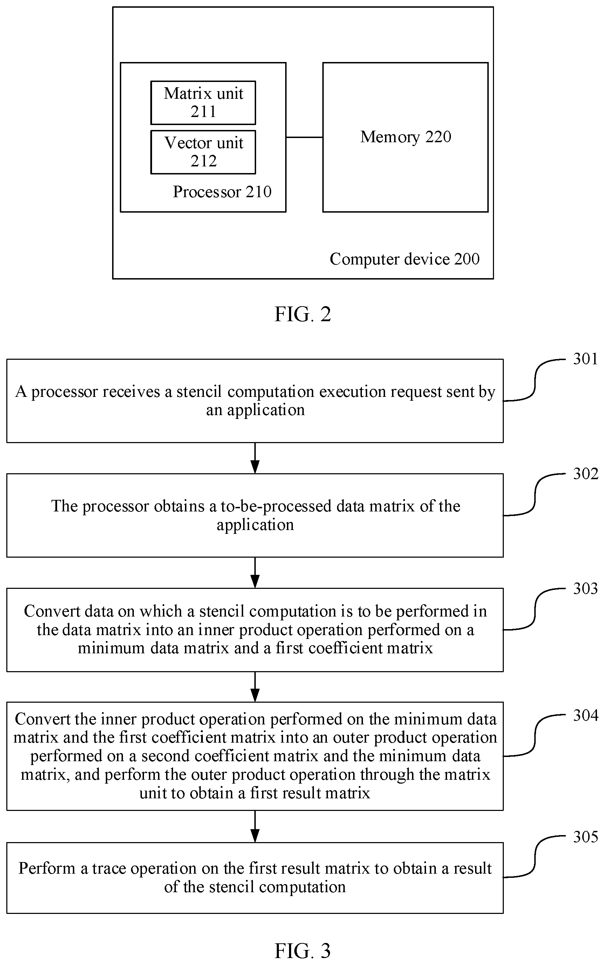

FIG. 2 is a schematic diagram of a structure of a computer device according to an embodiment of this application. As shown in FIG. 2, the computer device 200 includes at least a processor 210 and a memory 220. The processor 210 is a central processing unit (central processing unit, CPU), and the processor 210 may further include a matrix unit 211 and a vector unit 212, which are configured to implement a matrix operation and a vector operation. The matrix unit 211 may be an SME, and the vector unit 212 may be an SVE. The memory 220 is a volatile memory (volatile memory) or a non-volatile memory (non-volatile memory). Optionally, the memory 220 may store executable program code and a data matrix on which a stencil computation needs to be performed. The processor 210 may execute the program code in the memory 220, to perform the stencil computation on the data matrix stored in the memory 220, so as to implement the stencil computation method provided in embodiments of this application. For example, the processor 210 may obtain a to-be-processed data matrix of an application, convert data on which the stencil computation is to be performed in the data matrix into an inner product operation performed on a minimum data matrix and a first coefficient matrix, and then convert the inner product operation performed on the minimum data matrix and the first coefficient matrix into an outer product operation performed on a second coefficient matrix and the minimum data matrix. The outer product operation is performed through the matrix unit to obtain a first result matrix, and then a trace operation is performed on the first result matrix to obtain a result of the stencil computation.

In an example, an HPC application may be run in the computer device. In a process in which the computer device 200 runs the HPC application, if the HPC application relates to the stencil computation, the HPC application may send a stencil computation execution request to the processor 210. After receiving the stencil computation execution request, the processor 210 may obtain the to-be-processed data matrix from the memory 220, and perform, based on the matrix unit 211 and the vector unit 212, the stencil computation method provided in embodiments of this application, to implement the stencil computation on the data matrix. The computer device 200 is not limited to a terminal, a server, a computer cluster, or the like.

The SME is a scalable matrix element, currently supports only instructions related to vector outer product accumulation and data movement, and works with a vector register of the SVE to implement a matrix outer product operation. However, it can be learned from Formula (4) that a matrix inner product operation needs to be implemented to implement the stencil computation. Currently, the SME does not support the matrix inner product operation. Therefore, in the related technology, there is no solution for implementing the stencil computation based on the SME. As a result, a matrix operation capability of the SME cannot be fully used. In the stencil computation method provided in embodiments of this application, the stencil computation can be implemented based on the SME. For ease of understanding the stencil computation method provided in embodiments of this application, the following first describes an implementation principle of the stencil computation method provided in embodiments of this application.

It can be learned from Formula (4) that, the stencil computation performed on a data point in a computation domain may be converted into an inner product operation performed on two matrices. An inner product operation performed on any two matrices may be converted into an outer product operation performed on a matrix obtained after one matrix is transposed and the other matrix, and then a trace operation is performed on a matrix obtained through the outer product operation. In addition, an outer product operation performed on any two matrices may be converted into a vector outer product operation performed on each row in one matrix and a corresponding column in the other matrix, and summation is performed on a plurality of matrices obtained through the vector outer product operation. Based on the foregoing inference, Formula (2) may be converted into Formula (5):

$$B_{i,j} = trace(\sum (CA)^T_{col\_k} \otimes (DA_{i,j})_{row\_k}) \text{ Formula (5)}$$

$(CA)^T_{col\_k}$ is a $k^{th}$ column in a transposed coefficient matrix, and $(DA_{i,j})_{row\_k}$ is a $k^{th}$ row in the minimum data matrix. $k \in [1, n]$, $n$ is a quantity of columns of the coefficient matrix or a quantity of rows of the minimum data matrix, and *trace* indicates a transposition of the matrix.

It can be learned that, based on Formula (5), a matrix inner product operation corresponding to the stencil computation may be converted into a matrix outer product operation. Because the SME supports the vector outer product accumulation operation, the matrix outer product operation can be efficiently implemented. Therefore, in embodiments provided in this application, the SME may be used to implement the stencil computation based on Formula (5), so that a capability of the SME can be fully used, and efficiency of performing the stencil computation can be improved.

FIG. 3 is a schematic flowchart of a stencil computation method according to an embodiment of this application. The stencil computation method shown in FIG. 3 may be executed by the processor of the computer device in FIG. 2. Refer to FIG. 3. The method includes the following steps.

Step 301: The processor receives a stencil computation execution request sent by an application.

The application may be an application related to a stencil computation, for example, an application related to difference equation solving, differential equation solving, or image processing, for example, an HPC application. In a process in which a computer device runs the application, when the stencil computation needs to be performed, the application may send the stencil computation execution request to the processor, so that the processor performs the stencil computation on to-be-processed data. The to-be-processed data may be a data matrix, for example, a two-dimensional data matrix. The computer device in which the processor that performs the stencil computation is located and the computer device that runs the application may be a same computer device or may be different computer devices. For example, when the computer device in which the processor that performs the stencil computation is located and the computer device that runs the application are different computer devices, the computer device that runs the application may send, through a network, the stencil computation execution request to the processor of the computer device that performs the stencil computation.

In an example, the stencil computation execution request may carry key information such as a computation domain, a target domain, a data type, a "stencil" shape, and a computation rule of the stencil computation. According to the stencil computation method provided in embodiments of this application, a function for implementing the stencil computation may be formed by using an assembly/intrinsic/advanced language, and is used as a dynamic/static/advanced language acceleration library of the stencil computation. When the processor needs to perform the stencil computation, the processor may invoke the function for implementing the stencil computation in a function library, and input, into the corresponding function, the key information such as the computation domain, the target domain, the data type, the "stencil" shape, and the computation rule of the stencil computation that are used as input function parameters. Then, the processor executes the function (for example, the following step 302 to step 305), to implement the stencil computation method provided in embodiments of this application.

Step 302: The processor obtains a to-be-processed data matrix of the application.

After receiving the stencil computation execution request, the processor may obtain a data matrix on which the stencil computation needs to be performed. For example, the to-be-processed data matrix may be carried in the stencil computation execution request.

Step 303: Data on which the stencil computation is to be performed in the data matrix is converted into an inner product operation performed on a minimum data matrix and a first coefficient matrix.

The data on which the stencil computation is to be performed includes each data point in the data matrix and a neighboring data point corresponding to each data point. Because a size of a matrix register of the matrix unit is limited, computation performed on data points on which the stencil computation is to be performed in the data matrix may not be completed at a time. Therefore, in this embodiment of this application, a stencil computation may be performed on the data points in the data matrix in batches. A data point on which the stencil computation is performed in each batch may be referred to as a target data point, and the target data point may be one data point or a plurality of data points.

When the target data point is one data point, a manner of determining the target data point may include: sequentially determining, based on locations of the data points in the data matrix, the target data point on which the stencil computation is to be performed. For example, in the method procedure, when step 303 is performed for a first time, a determined data point may be a data point in a first row and a first column in the data matrix; when step 303 is performed for a second time, a determined data point may be a data point in the first row and a second column in the data matrix; and when step 303 is performed for an $L^{th}$ time, a determined data point may be a data point in an $n^{th}$ row and an $m^{th}$ column in the data matrix. $L=n*p+m$, and $p$ is a quantity of data points in a row of the data matrix. The foregoing manner of determining the target data point is merely an example for description of a case in which the target data point is one data point. During implementation, a person skilled in the art may further set other manners of determining the target data point, which are not listed one by one herein. A case in which the target data point is one data point is not described in detail herein. For details, refer to content of Manner 1 and Manner 2 below.

The conversion of the stencil computation into the inner product operation is described in Formula (1) to Formula (4), and details are not described herein again. In this step, that the data on which the stencil computation is to be performed in the data matrix is converted into the inner product operation performed on the minimum data matrix and the first coefficient matrix means that the minimum data matrix on which the inner product operation needs to be performed is obtained from the data matrix, and the first coefficient matrix on which the inner product operation is performed with the minimum data matrix is determined.

Step 304: The inner product operation performed on the minimum data matrix and the first coefficient matrix is converted into an outer product operation performed on a second coefficient matrix and the minimum data matrix, and the outer product operation is performed through the matrix unit to obtain a first result matrix.

The second coefficient matrix is a coefficient matrix obtained after the first coefficient matrix is transposed. That the inner product operation performed on the minimum data matrix and the first coefficient matrix is converted into the outer product operation performed on the second coefficient matrix and the minimum data matrix is to transpose the first coefficient matrix.

In an example, transposing the first coefficient matrix may be sequentially storing row vectors of the first coefficient matrix into vector registers $e_1$ to $e_n$ of an SVE. A vector stored in each register is a column vector of the second coefficient matrix.

For a minimum data matrix of the target data point, each row in the minimum data matrix may be stored in vector registers $v_1$ to $v_n$ of the SVE.

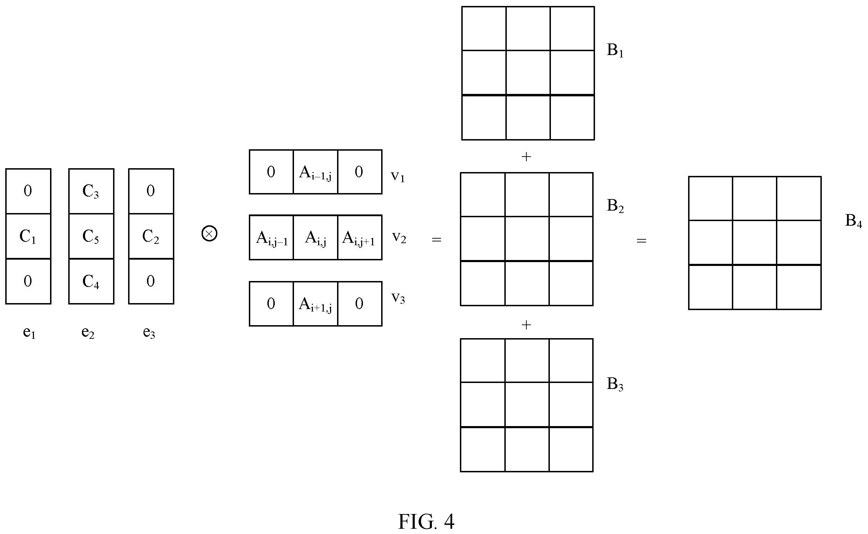

As shown in FIG. 4, a second coefficient matrix corresponding to $A_{i,j}$ is $\begin{bmatrix} 0 & c_1 & 0 \\ c_3 & c_5 & c_4 \\ 0 & c_2 & 0 \end{bmatrix}$, and a minimum data matrix corresponding to $A_{i,j}$ is $\begin{bmatrix} 0 & A_{i-1,j} & 0 \\ A_{i,j-1} & A_{i,j} & A_{i,j+1} \\ 0 & A_{i+1,j} & 0 \end{bmatrix}$. Columns $(0, c_3, 0)$, $(c_1, c_5, c_2)$, and $(0, c_4, 0)$ in the second coefficient matrix may be respectively stored in vector registers $e_1$, $e_2$, and $e_3$. Rows $(0, A_{i-1,j}, 0)$, $(A_{i,j-1}, A_{i,j}, A_{i,j+1})$, and $(0, A_{i+1,j}, 0)$ in the minimum data matrix are respectively stored in vector registers $v_1$, $v_2$, and $v_3$.

After the second coefficient matrix and the minimum data matrix that correspond to the target data point are stored in the vector registers of the SVE, the outer product operation may be performed on the second coefficient matrix and the minimum data matrix through the matrix unit, to obtain the first result matrix.

That the matrix unit performs the outer product operation on the second coefficient matrix and the minimum data matrix is that the SME performs a matrix outer product accumulation operation. To be specific, a vector outer product operation is separately performed on column vectors of the second coefficient matrix stored in the vector register of the SVE and row vectors of the minimum data matrix stored in the vector register of the SVE, and an obtained matrix is accumulated to the matrix stored in the matrix register of the SME. As shown in FIG. 4, a vector outer product operation may be performed on vectors stored in $e_1$ and $v_1$, and a matrix B1 obtained through the operation is stored in a matrix register $M_1$ of the SME. Then, a vector outer product operation may be performed on vectors stored in $e_2$ and $v_2$, and an obtained matrix B2 is accumulated on a matrix currently stored in $M_1$. Then, a vector outer product operation may be performed on vectors stored in $e_3$ and $v_3$, and an obtained matrix B3 is accumulated on a matrix currently stored in $M_1$, to obtain a matrix B4 stored in $M_1$, and the matrix B4 is a first result matrix corresponding to $A_{i,j}$.

Step 305: Perform a trace operation on the first result matrix to obtain a result of the stencil computation.

After the first result matrix is obtained, a trace of the first result matrix may be computed. In other words, the result of performing the stencil computation on the target data point is obtained by performing summation on data points on a diagonal of the first result matrix.

It should be understood that, after the result of performing the stencil computation on the target data point is obtained in step 305, it may be determined whether there is a remaining data point on which the stencil computation is not performed in the data matrix. If a data point on which the stencil computation is not performed exists in the data matrix, step 303 may be returned to update the target data point on which the stencil computation needs to be performed, and a result of performing the stencil computation on the updated target data point is determined again according to the method shown in step 303 to step 305, until results of performing the stencil computation on all the data points in the data matrix are obtained.

Generally, the stencil computation is applied to solving a difference equation or a differential equation. After the processor performs the stencil computation on all the data points in the data matrix to obtain a result matrix of performing the stencil computation on the data matrix, the result matrix may be further processed to obtain a solution of the difference equation or the differential equation, and the corresponding solution is returned to the application that sends the stencil computation execution request. After receiving the solution of the difference equation or the differential equation, the application may further perform HPC computation, such as meteorological prediction computation, weather prediction computation, and earthquake prediction computation, based on the solution of the difference equation or the differential equation.

In this embodiment of this application, the matrix inner product operation in the stencil computation is converted into the matrix outer product operation, so that the stencil computation can be implemented through the SME. In this way, a matrix operation capability of the SME can be fully used, and efficiency of performing the stencil computation by the processor is improved.

In an implementation, the stencil computation method provided in embodiments of this application may be further applied to a multi-dimensional stencil computation. Before the stencil computation method provided in embodiments of this application is applied to perform the multi-dimensional stencil computation, the multi-dimensional stencil computation may be split into a plurality of two-dimensional stencil computations. Then, the plurality of two-dimensional stencil computations are performed according to the stencil computation method provided in embodiments of this application. Finally, results obtained through performing the plurality of two-dimensional stencil computations are combined, to obtain a result of performing the multi-dimensional stencil computation.

This application further provides a method for optimizing the stencil computation method. To be specific, a computation on a plurality of target data points in a data matrix may be completed by performing step 303 to step 305 once. In other words, a plurality of target data points are determined in step 303. This application provides the following several manners of determining the plurality of target data points. The several manners of determining the target data points can further improve efficiency of performing the stencil computation.

Manner 1: In a same row of the data matrix, a plurality of consecutive data points on which the stencil computation is not performed are selected as target data points.

A size of the matrix register of the SME is generally 512 bits. For example, data is a double-precision floating point number (8 bits). A maximum of 64 pieces of data can be placed in the matrix register of the SME. In addition, because a matrix of a maximum size stored in the matrix register of the SME is a square matrix, both a quantity of rows and a quantity of columns of the matrix of the maximum size stored in the matrix register are 8 (where 8*8=64). In addition, because the vector outer product accumulation operation requires a vector length to be consistent with a matrix row length and a matrix column length, a maximum length of a vector for performing the vector outer product accumulation operation is 8. In other words, the vector register provided by the SVE can store a maximum of eight data points. For example, a size of a minimum data matrix is 3*3. Only three vector registers need to be occupied to store the minimum data matrix, and each vector register stores a maximum of three data points. In this way, storage locations of five data points in each vector register are not used.

In this embodiment of this application, a plurality of data points on which the stencil computation is not performed in a same row may be used as target data points. Correspondingly, in step 303 to step 305, a minimum data matrix formed by the plurality of target data points and corresponding neighboring data points may be obtained, and a matrix outer product operation may be performed on the obtained minimum data matrix and a corresponding second coefficient matrix. In this way, one matrix outer product operation can implement a stencil operation on the plurality of data points in the data matrix, so that the vector register can be fully used, and efficiency of the stencil computation can be improved.

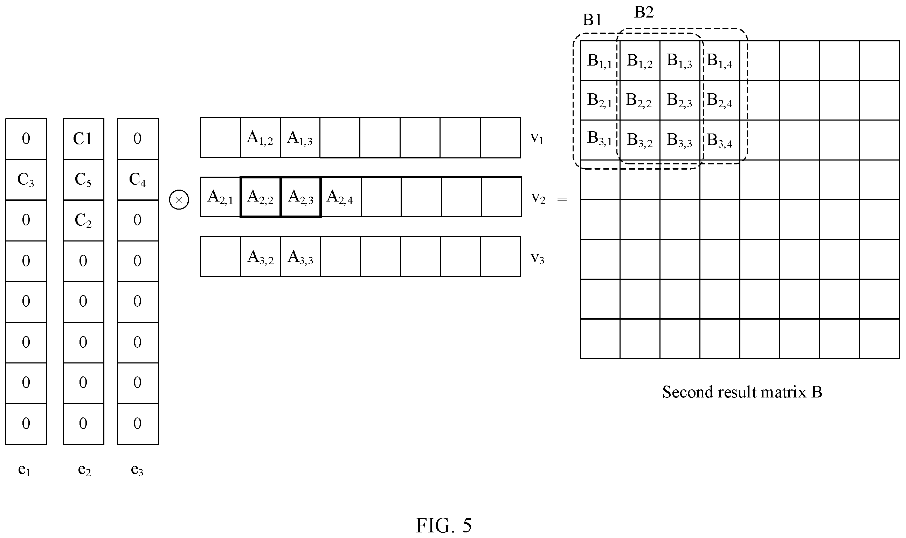

As shown in FIG. 5, two target data points $A_{2,2}$ and $A_{2,3}$ may be selected in a same row. Minimum data matrices of $A_{2,3}$ and $A_{2,3}$ may be separately stored by using three vector registers $v_1$, $v_2$, and $v_3$. In addition, second coefficient matrices obtained through transposition may be stored in three vector registers $e_1$, $e_2$, and $e_3$. After the vector registers store the minimum data matrices and the second coefficient matrices, the vector outer product accumulation operation may be performed on vectors stored in the vector registers $v_1$, $v_2$, and $v_3$ and the vector registers $e_1$, $e_2$, and $e_3$, to obtain a second result matrix B. The second result matrix B is a result of performing the matrix outer product operation on the second coefficient matrices and the minimum data matrices corresponding to $A_{2,2}$ and $A_{2,3}$. Still refer to FIG. 5. The second result matrix B includes a first result matrix B1 corresponding to $A_{2,2}$ and a first result matrix B2 corresponding to $A_{2,3}$. In this way, the processor may perform the stencil computation on a plurality of target data points at a time, so that efficiency of performing the stencil computation can be further improved.

Further, a first specified quantity of target data points that can be obtained at most at a time in a same row of the data matrix may be determined based on a maximum quantity of data points that can be stored in the vector register and a horizontal offset of the neighboring data point relative to the target data point in the data matrix. Specific processing is as follows:

Step S1: Determine a first quantity of data points that can be stored at most in a vector register configured to store the target data points.

During implementation, the first quantity of data points that can be stored at most in the vector register may be computed based on the size of the matrix register and the size of the data point in the data matrix. For example, the size of the matrix register of the SME is 512 bits. For example, data is a double-precision floating point number, and one vector register may store eight data points, that is, the first quantity is 8.

Step S2: Determine a sum of a maximum left offset and a maximum right offset of a neighboring data point of any data point in the data matrix relative to the any data point, to obtain a first value.

The neighboring data point corresponding to each target data point may be a data point that is in a same row or a same column as the target data point. In other words, the target data point may have neighboring data points in all four directions of the data matrix. The maximum left offset of the neighboring data point of the any data point relative to the any data point is a maximum offset, relative to the any data point, of a data point that is in the same row as the any data point and that is on a left side of the any data point. The maximum left offset is a quantity of neighboring data points, on the left side of the any data point, that need to be stored in the vector register. The maximum right offset of the neighboring data point of the any data point relative to the any data point is a maximum offset, relative to the any data point, of a data point that is in the same row as the any data point and that is on a right side of the any data point. The maximum right offset is an amount of neighboring data, on the right side of the any data point, that needs to be stored in the vector register. The first value corresponding to the sum of the maximum left offset and the maximum right offset is a quantity corresponding to neighboring data points that need to be stored in the same vector register as the target data point in the same row.

Step S3: Determine a difference between the first quantity and the first value as the first specified quantity.

If minimum data matrices corresponding to a plurality of target data points are stored by using a vector register, in the vector register storing the plurality of target data points, storage locations need to be reserved for a neighboring point on a left side of a first target data point in the plurality of target data points and a neighboring point on a right side of a last target data point in the plurality of target data points. First data is data of the neighboring point on the left side and the neighboring point on the right side, namely, data whose storage location needs to be reserved in the vector register. Therefore, the first value is subtracted from the first quantity of data points that can be stored at most in the vector register, and an obtained value is the first specified quantity of target data points that can be obtained at most in a same row of the data matrix at a time.

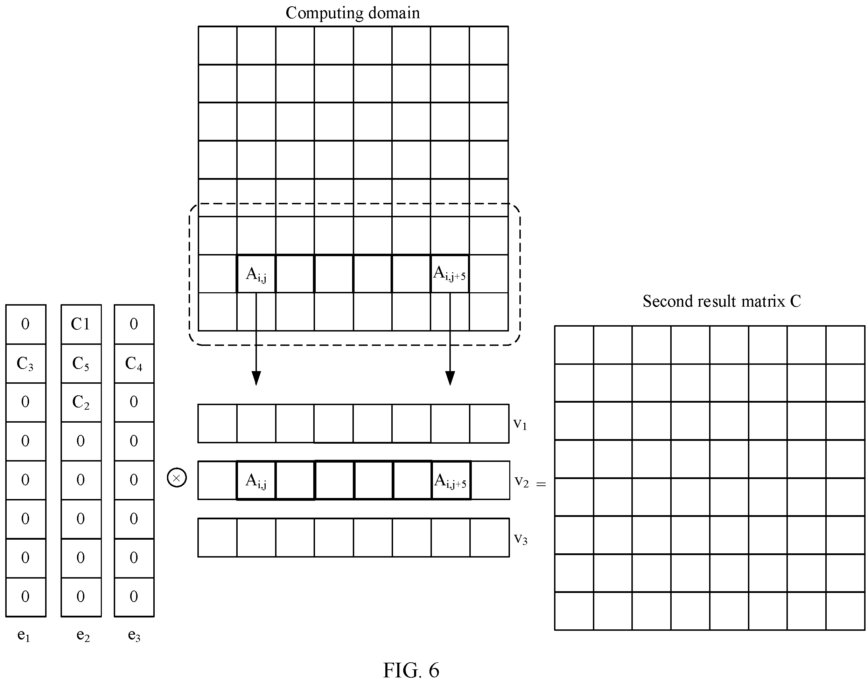

Refer to FIG. 6. For example, the first quantity of data points stored in the vector register is 8, both a maximum left offset and a maximum right offset of a neighboring data point corresponding to the target data point are 1, and a first value corresponding to a sum of the maximum left offset and the maximum right offset is 2. In this case, a maximum of six target data points can be stored in the vector register.

Still refer to FIG. 6. Six target data points, $A_{i,j}$ to $A_{i,j+5}$, are selected in a same row. Minimum data matrices of $A_{i,j+5}$ to $A_{i,j+5}$ may be separately stored by using three vector registers $v_1$, $v_2$, and $v_3$. In addition, second coefficient matrices obtained through transposition may be stored in three vector registers $e_1$, $e_2$, and $e_3$. After the vector registers store the minimum data matrices and the second coefficient matrices, the vector outer product accumulation operation may be performed on vectors stored in the vector registers $v_1$, $v_2$, and $v_3$ and the vector registers $e_1$, $e_2$, and $e_3$, to obtain a second result matrix C. The second result matrix C is a result of performing the matrix outer product operation on the second coefficient matrices obtained through transposition and the minimum data matrices corresponding to $A_{i,j}$ to $A_{i,j+5}$. In this way, six target data points can be computed by performing one matrix outer product operation. This may further improve efficiency of the stencil computation.

It should be noted that, the plurality of data points that are selected in the same row of the data matrix and on which the stencil computation is not performed may alternatively be a plurality of nonconsecutive data points. An implementation thereof is basically the same as the implementation of Manner 1, and details are not described herein again.

Manner 2: Determine a plurality of adjacent rows in the data matrix, and select, in each determined row, at least one data point on which the stencil computation is not performed as a target data point.

A size of the matrix register of the SME is 512 bits. For example, data is a double-precision floating point number (8 bits). Therefore, a maximum of 64 pieces of data can be placed in the matrix register of the SME. In addition, because a matrix of a maximum size stored in the matrix register of the SME is a square matrix, a quantity of rows and a quantity of columns each are 8 (where 8*8=64). Because vector outer product accumulation requires a vector length to be consistent with a matrix row length and a matrix column length, the vector register provided by the SVE can store a maximum of eight pieces of data. For example, a size of a second coefficient matrix is 3*3. Only three vector registers need to be occupied to store the second coefficient matrix, and each vector register stores a maximum of three data points. In this way, storage locations of five data points in each vector register are not used.

In this embodiment of this application, a plurality of second coefficient matrices may be stored by using a vector register. One second coefficient matrix may be operated with a target data point in one row of the data matrix. Therefore, correspondingly, adding a stored second coefficient matrix to the vector register may increase a quantity of rows of the target data points selected from the data matrix. Correspondingly, in step 303 to step 305, a minimum data matrix formed by a plurality of target data points and corresponding neighboring data points that are obtained in a plurality of rows may be obtained, and a matrix outer product operation may be performed on the obtained minimum data matrix and a plurality of second coefficient matrices stored in the vector register. The quantity of rows of the selected target data points is equal to the quantity of second coefficient matrices stored in the vector register. In this way, one matrix outer product operation can implement a stencil operation on the plurality of data points in the data matrix, so that the vector register can be fully used, and efficiency of the stencil computation can be improved.

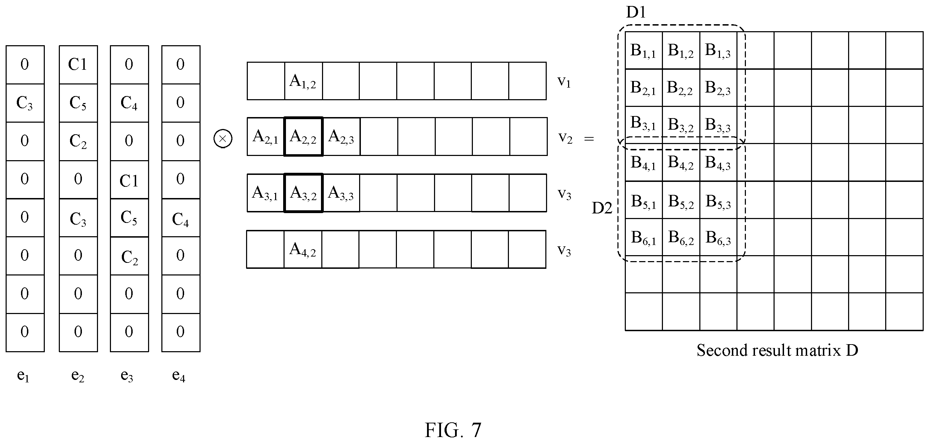

As shown in FIG. 7, two target data points, $A_{2,2}$ and $A_{3,2}$, may be selected from two adjacent rows. Two second coefficient matrices may be stored by using four vector registers $e_1$, $e_2$, $e_3$, and $e_4$, and minimum data matrices corresponding to $A_{2,2}$ and $A_{3,2}$ may be stored by using four vector registers $v_1$, $v_2$, $v_3$, and $v_4$. After the second coefficient matrices and the minimum data matrices are stored in the vector registers, a vector outer product accumulation operation may be performed on vectors stored in the vector registers $v_1$, $v_2$, $v_3$, and $v_4$ and the vector registers $e_1$, $e_2$, $e_3$, and $e_4$, to obtain a second result matrix D. The second result matrix D is a result of performing the matrix outer product operation on the second coefficient matrices and the minimum data matrices corresponding to $A_{2,2}$ and $A_{3,2}$. Still refer to FIG. 7. The second result matrix D includes a first result matrix D1 corresponding to $A_{2,2}$ and a first result matrix D2 corresponding to $A_{2,3}$.

Further, a maximum quantity of second coefficient matrices that can be stored in the vector register, namely, a maximum quantity of rows (namely, a second specified quantity) corresponding to the target data points in the data matrix that are obtained at a time, may be determined based on the maximum quantity of data points that can be stored in the vector register and a vertical offset of the neighboring data point relative to the target data point in the data matrix. Specific processing is as follows:

Step S1: Determine a first quantity of data points that can be stored at most in a vector register in a vector unit.

During implementation, the first quantity of data points that can be stored at most in the vector register may be computed based on the size of the matrix register and the size of the data point in the data matrix. For example, the size of the matrix register of the SME is 512 bits. For example, data is a double-precision floating point number, and one vector register may store eight data points, that is, the first quantity is 8.

Step S2: Determine a sum of a maximum left offset and a maximum right offset of a neighboring data point of any data point in the data matrix relative to the any data point, to obtain a first value, and add one to the first value to obtain a second value.

Step S3: Determine a sum of a maximum upper offset and a maximum lower offset of the neighboring data point of the any data point in the data matrix relative to the any data point, to obtain a third value.

The maximum upper offset of the neighboring data point of the any data point relative to the any data point is a maximum offset, relative to the any data point, of a data point that is in a same column as the any data point and that is on an upper side of the any data point. The maximum lower offset of the neighboring data point of the any data point relative to the any data point is a maximum offset, relative to the any data point, of a data point that is in the same column as the any data point and that is on a lower side of the any data point.

Step S4: Determine a ratio corresponding to the first quantity and the second value and a difference between the first quantity and the third value.

Step S5: Determine a smaller value in the ratio and the difference as the second specified quantity.

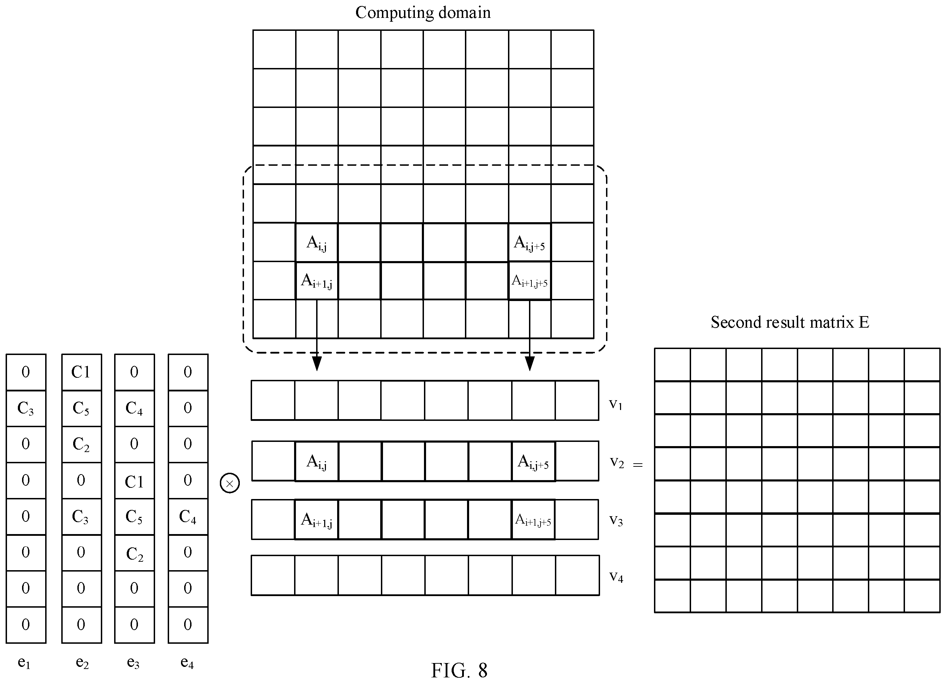

Refer to FIG. 8. For example, if the first quantity of data points stored in the vector register is 8, and the maximum left offset, the maximum right offset, the maximum upper offset, and the maximum lower offset of the neighboring data point corresponding to the target data point are all 1, the second value is 3, and the third value is 2. The ratio between the first quantity and the second value is rounded down to get a ratio 2. The third value is subtracted from the first quantity to obtain a difference 6. If the ratio is less than the difference, the second specified quantity is determined as 2. In other words, the target data point may be obtained in two rows of the data matrix at a time.

It should be noted that the plurality of rows determined in the data matrix may not be adjacent. An implementation thereof is basically the same as the implementation of Manner 2, and details are not described herein again. Corresponding to the optimization method, namely, the method for determining the plurality of target data points in step 303, in step 305, a trace operation may be performed on each first result matrix included in the obtained second result matrix, to obtain a result of performing the stencil computation on the plurality of target data points.

Further, Manner 1 and Manner 2 may be combined. To be specific, a plurality of adjacent rows may be determined in the data matrix, and a plurality of data points on which the stencil computation is to be performed are selected as target data points in each determined row, so that efficiency of performing the stencil computation can be improved. Still refer to FIG. 8. 12 target data points, $A_{i,j}$ to $A_{i,j+5}$ and $A_{i+1,j}$ to $A_{i+1,j+5}$, are selected from two adjacent rows. Two second coefficient matrices may be stored by using four vector registers $e_1$, $e_2$, $e_3$, and $e_4$, and minimum data matrices corresponding to $A_{i,j}$ to $A_{i,j+5}$ and $A_{i+1,j}$ to $A_{i+1,j+5}$ may be stored by using four vector registers $v_1$, $v_2$, $v_3$, and $v_4$. After the second coefficient matrices and the minimum data matrices are stored in the vector registers, a vector outer product accumulation operation may be performed on vectors stored in the vector registers $v_1$, $v_2$, $v_3$, and $v_4$ and the vector registers $e_1$, $e_2$, $e_3$, and $e_4$, to obtain a second result matrix E. The second result matrix E is a result of performing the matrix outer product operation on the second coefficient matrices and the minimum data matrices corresponding to $A_{i,j}$ to $A_{i,j+5}$ and $A_{i+1,j}$ to $A_{i+1,j+5}$. The second result matrix E includes first result matrices respectively corresponding to $A_{i,j}$ to $A_{i,j+5}$ and $A_{i+1,j}$ to $A_{i+1,j+5}$. In this way, one matrix outer product operation can implement a stencil operation on the plurality of data points in the data matrix, so that the vector register can be fully used, and efficiency of the stencil computation can be improved.

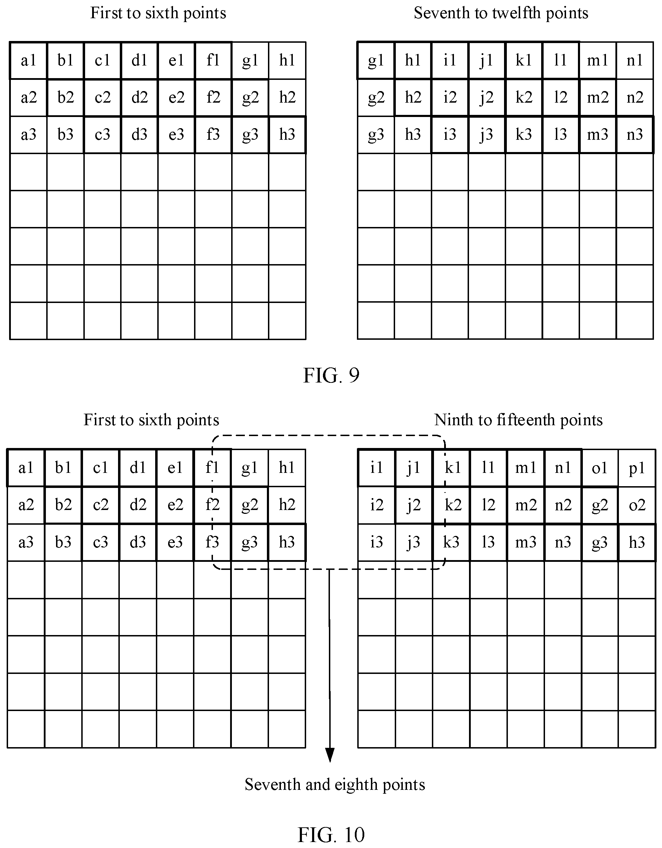

In this embodiment of this application, for a case in which a plurality of consecutive target data points are obtained in a same row in step 303, a method for optimizing the stencil computation method is further provided. The following describes the optimization method with reference to FIG. 9 and FIG. 10.

During implementation, a person skilled in the art finds that a redundancy computation exists in the stencil computation performed on two adjacent batches of target data points in a same row. As shown in FIG. 9, a first batch of computing target data points are first to sixth data points in a row, and a second batch of computing target data points are seventh to twelfth data points in a same row. It can be learned from FIG. 9 that last two columns in a second result matrix corresponding to the first to sixth data points are the same as first two columns in a second result matrix corresponding to the seventh to twelfth data points.

For the feature of the redundancy computation, this application provides a method for resolving the redundancy computation. Details are as follows:

After step 305 is performed each time, if more than a third specified quantity of data points on which the stencil computation is not performed still exist in a target row in which the target data point is located in the data matrix, a plurality of consecutive data points that are separated from the target data point by N data points and on which the stencil computation is not performed are selected from the target row. The plurality of selected data points are used as updated target data points, and an operation of determining a first coefficient matrix and a minimum data matrix that correspond to the target data points is performed.

The third specified quantity may be preset by a person skilled in the art. For example, the third specified quantity may be equal to N. A value of N is equal to the sum of the maximum left offset and the maximum right offset of the neighboring data point of the any data point in the data matrix relative to the any data point. The N data points that are used for separation are N data points on which the redundancy computation exists. In this way, after the N data points on which the redundancy computation exists are separated, when the process of cyclically performing step 303 to step 305 is performed again, the redundancy computation can be avoided, and efficiency of performing the stencil computation can be further improved.

In an implementation, for the N data points that used for separation, a corresponding stencil computation manner is as follows: After a second result matrix is obtained each time, data points in last N columns in the second result matrix are stored. For the N data points that are used for separation, a result of performing the stencil computation on the N data points that are used for separation is determined based on the data points in the last N columns and data points in first N columns in a second result matrix corresponding to the updated target data points. First result matrices respectively corresponding to the N data points that are used for separation may be formed based on the data points in the last N columns and the data points in the first N columns, and then a trace operation may be performed on the first result matrices respectively corresponding to the N data points, to obtain a result of performing the stencil computation on the N data points that are used for separation. In addition, when the data points in the last N columns and the data points in the first N columns are stored, only data points located on diagonals of the first result matrices corresponding to the N data points that are used for separation may be stored. In this way, the result of performing the stencil computation on the N data points that are used for separation may be obtained by only performing summation on the stored data points.

As shown in FIG. 10, when N is equal to 2 and the target data points obtained for the first time in step 303 are the first to sixth data points, the ninth to fifteenth data points may be obtained when step 303 is performed next time. For the seventh and eighth points, first result matrices respectively corresponding to the seventh and eighth points may be formed based on data points of last two columns included in a second result matrix computed for a first time and data points of first two columns included in a second result matrix computed for a second time, and then a trace operation may be performed on the first result matrices respectively corresponding to the seventh and eighth points to obtain a result of performing the stencil computation on the seventh and eighth points.

In this embodiment of this application, a redundancy computation existing in a stencil computation that is performed on a plurality of data points twice can be avoided. Because there are N data points used for separation between two adjacent iterative computations, a quantity of iterative computations in a stencil computation process can be reduced, and efficiency of performing the stencil computation can be further improved.

All of the optional technical solutions may form optional embodiments of this disclosure through any combination. Details are not described herein again.

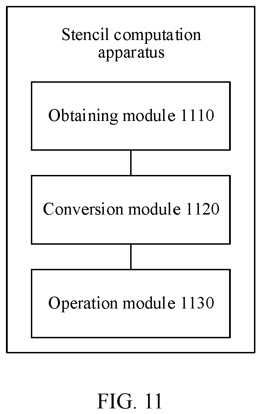

FIG. 11 is a schematic diagram of a structure of a stencil computation apparatus according to an embodiment of this application. The apparatus may be the computer device in the foregoing embodiments. As shown in FIG. 11, the apparatus includes:

an obtaining module 1110, configured to obtain to-be-processed data of an application, where the to-be-processed data is a data matrix, and specifically, the obtaining function in step 302 and other implicit steps may be implemented;
a conversion module 1120, configured to: convert data on which a stencil computation is to be performed in the data matrix into an inner product operation performed on a minimum data matrix and a first coefficient matrix; and convert the inner product operation performed on the minimum data matrix and the first coefficient matrix into an outer product operation performed on a second coefficient matrix and the minimum data matrix, where specifically, the conversion function in step 303 and step 304 and other implicit steps may be implemented; and
an operation module 1130, configured to: perform the outer product operation through the matrix unit to obtain a first result matrix, and perform a trace operation on the first result matrix to obtain a result of the stencil computation, where specifically, the operation function in step 304 and step 305 and other implicit steps may be implemented.

In an implementation, the application is a high performance computing HPC application.

In an implementation, the data on which the stencil computation is to be performed is a target data point and a neighboring data point of the target data point in the data matrix.

In an implementation, the conversion module 1120 is further configured to select, in a same row of the data matrix, a plurality of consecutive data points on which the stencil computation is not performed as target data points, where a quantity of the plurality of selected data points is less than or equal to a first specified quantity.

In an implementation, the conversion module 1120 is further configured to: determine a first quantity of data points that can be stored at most in a vector register configured to store the target data points; determine a sum of a maximum left offset and a maximum right offset of a neighboring data point of any data point in the data matrix relative to the any data point, to obtain a first value; and determine a difference between the first quantity and the first value as the first specified quantity.

In an implementation, the conversion module 1120 is further configured to: determine a plurality of adjacent rows in the data matrix, and select, in each determined row, at least one data point on which the stencil computation is not performed as a target data point, where a quantity of the plurality of determined rows is less than or equal to a second specified quantity.

In an implementation, the conversion module 1120 is further configured to: determine a first quantity of data points that can be stored at most in a vector register of a vector unit; determine a sum of a maximum left offset and a maximum right offset of a neighboring data point of any data point in the data matrix relative to the any data point, to obtain a first value, and add one to the first value to obtain a second value; determine a sum of a maximum upper offset and a maximum lower offset of the neighboring data point of the any data point in the data matrix relative to the any data point, to obtain a third value; determine a ratio corresponding to the first quantity and the second value and a difference between the first quantity and the third value; and determine a smaller value in the ratio and the difference as the second specified quantity.

In an implementation, the conversion module is configured to convert the first coefficient matrix to obtain the second coefficient matrix. The operation module is configured to perform the outer product operation on the second coefficient matrix and the minimum data matrix through the matrix unit, to obtain a second result matrix, where the second result matrix includes a first result matrix corresponding to each target data point.

In an implementation, the conversion module 1120 is further configured to: if more than a third specified quantity of data points on which the stencil computation is not performed still exist in a target row in which the target data point is located in the data matrix, select, in the target row, a plurality of consecutive data points that are separated from the target data point by N data points and on which the stencil computation is not performed, where N is equal to the sum of the maximum left offset and the maximum right offset of the neighboring data point of the any data point in the data matrix relative to the any data point; and use the plurality of selected data points as updated target data points, and perform the step of converting data on which a stencil computation is to be performed in the data matrix into an inner product operation performed on a minimum data matrix and a first coefficient matrix.

In an implementation, the operation module 1130 is further configured to: store data points in last N columns in the second result matrix; and for the N data points that are used for separation, determine, based on the data points in the last N columns and data points in first N columns in a second result matrix corresponding to the updated target data points, a result of performing the stencil computation on the N data points that are used for separation.

In an implementation, the conversion module is configured to: if a data point on which the stencil computation is to be performed exists in the data matrix, perform the step of converting data on which a stencil computation is to be performed in the data matrix into an inner product operation performed on a minimum data matrix and a first coefficient matrix.

In an implementation, the matrix unit is a scalable matrix element SME.

It should be noted that, when the stencil computation apparatus provided in the foregoing embodiments performs the stencil computation, division of the functional modules is merely used as an example for description. In actual application, the functions may be allocated to different functional modules for implementation according to requirements, that is, an internal structure of the device is divided into different functional modules, to implement all or some of the functions described above. In addition, the stencil computation apparatus provided in the foregoing embodiments and the embodiments of the stencil computation method belong to a same concept. For a specific implementation process, refer to the method embodiments, and details are not described herein again.

An embodiment of this application provides a computer program product including instructions. When the instructions are run by a computer device, the computer device is enabled to perform the stencil computation method in the foregoing embodiments.

All or some of the foregoing embodiments may be implemented by using software, hardware, firmware, or any combination thereof. When the software is used for implementation, all or some of the embodiments may be implemented in a form of a computer program product. The computer program product includes one or more computer instructions. When the computer program instructions are loaded and executed on a device, all or some of the procedures or functions are generated according to embodiments of this application. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial optical cable, an optical fiber, or a digital subscriber line) or wireless (for example, infrared, radio, or microwave) manner. The computer-readable storage medium may be any usable medium accessible by a device, or a data storage device, such as a server or a data center, integrating one or more usable media. The usable medium may be a magnetic medium (for example, a floppy disk, a hard disk, or a magnetic tape), an optical medium (for example, a digital video disk (digital video disk, DVD)), or a semiconductor medium (for example, a solid-state drive).

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

In this application, terms such as "first" and "second" are used to distinguish same items or similar items that have basically same functions. It should be understood that there is no logical or time sequence dependency between "first" and "second", and a quantity and an execution sequence are not limited. It should also be understood that although the terms such as "first" and "second" are used in the following descriptions to describe various elements, these elements should not be limited by the terms. These terms are merely used to distinguish one element from another element. In this application, the term "at least one" means one or more and the term "a plurality of" means two or more.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

The foregoing descriptions are merely embodiments of this application, but are not intended to limit this application. Any modification, equivalent replacement, or improvement made without departing from the spirit and principle of this application should fall within the protection scope of this application.

**Claims**

1. A stencil computation method, performed by a processor, wherein the processor comprises a matrix unit, and the method comprises:

   obtaining to-be-processed data of an application, wherein the to-be-processed data is a data matrix;
   converting data on which a stencil computation is to be performed in the data matrix into an inner product operation performed on a minimum data matrix and a first coefficient matrix;
   converting the inner product operation performed on the minimum data matrix and the first coefficient matrix into an outer product operation performed on a second coefficient matrix and the minimum data matrix, and performing the outer product operation through the matrix unit to obtain a first result matrix; and
   performing a trace operation on the first result matrix to obtain a result of the stencil computation.

2. The method according to claim 1, wherein the data on which the stencil computation is to be performed is a target data point and a neighboring data point of the target data point in the data matrix.

3. The method according to claim 2, wherein before the converting data on which a stencil computation is to be performed in the data matrix into an inner product operation performed on a minimum data matrix and a first coefficient matrix, the method further comprises:
   selecting, in a same row of the data matrix, a plurality of consecutive data points on which the stencil computation is not performed as target data points, wherein a quantity of the plurality of selected data points is less than or equal to a first specified quantity.

4. The method according to claim 2 or 3, wherein before the converting data on which a stencil computation is to be performed in the data matrix into an inner product operation performed on a minimum data matrix and a first coefficient matrix, the method further comprises:
   determining a plurality of adjacent rows in the data matrix, and selecting, in each determined row, at least one data point on which the stencil computation is not performed as a target data point, wherein a quantity of the plurality of determined rows is less than or equal to a second specified quantity.

5. The method according to claim 3 or 4, wherein the converting the inner product operation performed on the minimum data matrix and the first coefficient matrix into an outer product operation performed on a second coefficient matrix and the minimum data matrix, and performing the outer product operation through the matrix unit to obtain a first result matrix comprises:

   transposing the first coefficient matrix to obtain the second coefficient matrix; and
   performing the outer product operation on the second coefficient matrix and the minimum data matrix through the matrix unit, to obtain a second result matrix, wherein the second result matrix comprises a first result matrix corresponding to each target data point.

6. The method according to claim 5, wherein after the performing the outer product operation on the second coefficient matrix and the minimum data matrix through the matrix unit, the method further comprises:

   if more than a third specified quantity of data points on which the stencil computation is not performed still exist in a target row in which the target data point is located in the data matrix, selecting, in the target row, a plurality of consecutive data points that are separated from the target data point by N data points and on which the stencil computation is not performed, wherein N is equal to a sum of a maximum left offset and a maximum right offset of a neighboring data point of any data point in the data matrix relative to the any data point; and
   using the plurality of selected data points as updated target data points, and performing the step of converting data on which a stencil computation is to be performed in the data matrix into an inner product operation performed on a minimum data matrix and a first coefficient matrix.

7. The method according to claim 6, wherein after the second result matrix is obtained, the method further comprises:

   storing data points in last N columns in the second result matrix; and
   the method further comprises:
   for the N data points that are used for separation, determining, based on the data points in the last N columns and data points in first N columns in a second result matrix corresponding to the updated target data points, a result of performing the stencil computation on the N data points that are used for separation.

8. The method according to any one of claims 1 to 7, wherein the matrix unit is a scalable matrix element SME.

9. The method according to any one of claims 1 to 8, wherein the application is a high performance computing HPC application.

10. A stencil computation apparatus, wherein the apparatus is used in a processor, the processor comprises a matrix unit, and the apparatus comprises:

an obtaining module, configured to obtain to-be-processed data of an application, wherein the to-be-processed data is a data matrix;
a conversion module, configured to: convert data on which a stencil computation is to be performed in the data matrix into an inner product operation performed on a minimum data matrix and a first coefficient matrix; and convert the inner product operation performed on the minimum data matrix and the first coefficient matrix into an outer product operation performed on a second coefficient matrix and the minimum data matrix; and
an operation module, configured to: perform the outer product operation through the matrix unit to obtain a first result matrix, and perform a trace operation on the first result matrix to obtain a result of the stencil computation.

11. The apparatus according to claim 10, wherein the data on which the stencil computation is to be performed is a target data point and a neighboring data point of the target data point in the data matrix.

12. The apparatus according to claim 11, wherein the conversion module is further configured to:
select, in a same row of the data matrix, a plurality of consecutive data points on which the stencil computation is not performed as target data points, wherein a quantity of the plurality of selected data points is less than or equal to a first specified quantity.

13. The apparatus according to claim 11 or 12, wherein the conversion module is further configured to:
determine a plurality of adjacent rows in the data matrix, and select, in each determined row, at least one data point on which the stencil computation is not performed as a target data point, wherein a quantity of the plurality of determined rows is less than or equal to a second specified quantity.

14. The apparatus according to claim 12 or 13, wherein the conversion module is configured to transpose the first coefficient matrix to obtain the second coefficient matrix; and
the operation module is configured to perform the outer product operation on the second coefficient matrix and the minimum data matrix through the matrix unit, to obtain a second result matrix, wherein the second result matrix comprises a first result matrix corresponding to each target data point.

15. The apparatus according to claim 14, wherein the conversion module is further configured to:
if more than a third specified quantity of data points on which the stencil computation is not performed still exist in a target row in which the target data point is located in the data matrix, select, in the target row, a plurality of consecutive data points that are separated from the target data point by N data points and on which the stencil computation is not performed, wherein N is equal to a sum of a maximum left offset and a maximum right offset of a neighboring data point of any data point in the data matrix relative to the any data point; and use the plurality of selected data points as updated target data points, and perform the step of converting data on which a stencil computation is to be performed in the data matrix into an inner product operation performed on a minimum data matrix and a first coefficient matrix.

16. The apparatus according to claim 15, wherein the operation module is further configured to:
store data points in last N columns in the second result matrix; and for the N data points that are used for separation, determine, based on the data points in the last N columns and data points in first N columns in a second result matrix corresponding to the updated target data points, a result of performing the stencil computation on the N data points that are used for separation.

17. The apparatus according to any one of claims 10 to 16, wherein the matrix unit is a scalable matrix element SME.

18. The apparatus according to any one of claims 10 to 17, wherein the application is a high performance computing HPC application.

FIG. 1

FIG. 2

A processor receives a stencil computation execution request sent by an application — 301

The processor obtains a to-be-processed data matrix of the application — 302

Convert data on which a stencil computation is to be performed in the data matrix into an inner product operation performed on a minimum data matrix and a first coefficient matrix — 303

Convert the inner product operation performed on the minimum data matrix and the first coefficient matrix into an outer product operation performed on a second coefficient matrix and the minimum data matrix, and perform the outer product operation through the matrix unit to obtain a first result matrix — 304

Perform a trace operation on the first result matrix to obtain a result of the stencil computation — 305

FIG. 3

FIG. 4

$B_4$

$=$

$B_1$ $+$ $B_2$ $+$ $B_3$

$=$

$v_1$ $v_2$ $v_3$

$\begin{array}{|c|c|c|} 0 & A_{i-1,j} & 0 \end{array}$ $\begin{array}{|c|c|c|} A_{i,j-1} & A_{i,j} & A_{i,j+1} \end{array}$ $\begin{array}{|c|c|c|} 0 & A_{i+1,j} & 0 \end{array}$

$\otimes$

$\begin{array}{|c|c|c|} 0 & C_1 & 0 \end{array}$ $e_1$ $\begin{array}{|c|c|c|} C_3 & C_5 & C_4 \end{array}$ $e_2$ $\begin{array}{|c|c|c|} 0 & C_2 & 0 \end{array}$ $e_3$

EP 4 586 111 A1

FIG. 5

FIG. 6

EP 4 586 111 A1

FIG. 7

Computing domain

Second result matrix E

| | | | | | | | |
|---|---|---|---|---|---|---|---|
| | | | | | | | |
| | | | | | | | |
| | | | | | | | |
| | | | | | | | |
| | $A_{i,j}$ | | | | $A_{i,j+5}$ | | |
| | $A_{i+1,j}$ | | | | $A_{i+1,j+5}$ | | |
| | | | | | | | |

| 0 | C1 | 0 | 0 |
|---|---|---|---|
| $C_3$ | $C_5$ | $C_4$ | 0 |
| 0 | $C_2$ | 0 | 0 |
| 0 | 0 | C1 | 0 |
| 0 | $C_3$ | $C_5$ | $C_4$ |
| 0 | 0 | $C_2$ | 0 |
| 0 | 0 | 0 | 0 |
| 0 | 0 | 0 | 0 |

$e_1 \quad e_2 \quad e_3 \quad e_4$

$\otimes$

| | | | | | | | | $v_1$
| $A_{i,j}$ | | | | $A_{i,j+5}$ | | | | $v_2$
| $A_{i+1,j}$ | | | | $A_{i+1,j+5}$ | | | | $v_3$
| | | | | | | | | $v_4$

$=$

FIG. 8

First to sixth points

| a1 | b1 | c1 | d1 | e1 | f1 | g1 | h1 |
|----|----|----|----|----|----|----|----|
| a2 | b2 | c2 | d2 | e2 | f2 | g2 | h2 |
| a3 | b3 | c3 | d3 | e3 | f3 | g3 | h3 |
|    |    |    |    |    |    |    |    |
|    |    |    |    |    |    |    |    |
|    |    |    |    |    |    |    |    |
|    |    |    |    |    |    |    |    |
|    |    |    |    |    |    |    |    |

Seventh to twelfth points

| g1 | h1 | i1 | j1 | k1 | l1 | m1 | n1 |
|----|----|----|----|----|----|----|----|
| g2 | h2 | i2 | j2 | k2 | l2 | m2 | n2 |
| g3 | h3 | i3 | j3 | k3 | l3 | m3 | n3 |
|    |    |    |    |    |    |    |    |
|    |    |    |    |    |    |    |    |
|    |    |    |    |    |    |    |    |
|    |    |    |    |    |    |    |    |
|    |    |    |    |    |    |    |    |

FIG. 9

First to sixth points

| a1 | b1 | c1 | d1 | e1 | f1 | g1 | h1 |
|----|----|----|----|----|----|----|----|
| a2 | b2 | c2 | d2 | e2 | f2 | g2 | h2 |
| a3 | b3 | c3 | d3 | e3 | f3 | g3 | h3 |
|    |    |    |    |    |    |    |    |
|    |    |    |    |    |    |    |    |
|    |    |    |    |    |    |    |    |
|    |    |    |    |    |    |    |    |
|    |    |    |    |    |    |    |    |

Ninth to fifteenth points

| i1 | j1 | k1 | l1 | m1 | n1 | o1 | p1 |
|----|----|----|----|----|----|----|----|
| i2 | j2 | k2 | l2 | m2 | n2 | g2 | o2 |
| i3 | j3 | k3 | l3 | m3 | n3 | g3 | h3 |
|    |    |    |    |    |    |    |    |
|    |    |    |    |    |    |    |    |
|    |    |    |    |    |    |    |    |
|    |    |    |    |    |    |    |    |
|    |    |    |    |    |    |    |    |

Seventh and eighth points

FIG. 10

Stencil computation
apparatus

Obtaining module 1110

Conversion module 1120

Operation module 1130

FIG. 11

## INTERNATIONAL SEARCH REPORT

| International application No. |
| --- |
| **PCT/CN2023/103325** |

| A. | CLASSIFICATION OF SUBJECT MATTER |
| --- | --- |

G06F 17/16(2006.01)i

According to International Patent Classification (IPC) or to both national classification and IPC

| B. | FIELDS SEARCHED |
| --- | --- |

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNTXT; CNABS; EPTXT; USTXT; WOTXT; VEN; CNKI; IEEE: 模板, 矩阵, 系数, 内积, 外积, 迹, stencil, matrix, coefficient, inner product, outer product, trace

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 106020775 A (INTERNATIONAL BUSINESS MACHINES CORP.) 12 October 2016 (2016-10-12) <br> description, paragraphs 22-58 | 1-18 |
| X | CN 115203634 A (ZHEJIANG UNIVERSITY et al.) 18 October 2022 (2022-10-18) <br> description, paragraphs 124-128 | 1-18 |
| A | CN 112835552 A (SCIENTREE INFORMATION TECHNOLOGY CO., LTD.) 25 May 2021 (2021-05-25) <br> entire document | 1-18 |
| A | US 2011040822 A1 (IBM) 17 February 2011 (2011-02-17) <br> entire document | 1-18 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 September 2023** | **20 September 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/103325**

| Patent document cited in search report | | | Publication date (day/month/year) | Patent family member(s) | | | Publication date (day/month/year) |
|---|---|---|---|---|---|---|---|
| CN | 106020775 | A | 12 October 2016 | US | 2016283441 | A1 | 29 September 2016 |
| | | | | US | 9910826 | B2 | 06 March 2018 |
| | | | | DE | 102016205020 | A1 | 29 September 2016 |
| | | | | CN | 106020775 | B | 17 August 2018 |
| CN | 115203634 | A | 18 October 2022 | | None | | |
| CN | 112835552 | A | 25 May 2021 | | None | | |
| US | 2011040822 | A1 | 17 February 2011 | US | 8650240 | B2 | 11 February 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211361775

- CN 202310104348